# EUROPEAN PATENT SPECIFICATION

(11) **EP 2 172 384 B1**
(45) Date of publication and mention of the grant of the patent: **11.07.2012**
(21) Application number: 08075810.5
(22) Date of filing: 06.10.2008
(51) Int. Cl.: B62B 3/02

(54) **Flat platform cart with collapsible casters**
Pritschenwagen mit einklappbaren Laufrollen
Chariot à plateforme avec des roulettes escamotables

(43) Date of publication of application: 07.04.2010
(73) Proprietor: Jian, Shikun, Jiangcheng District Chengxi Yangjiang City Guangdong 529500 (CN)
(72) Inventor: Jian, Shikun, Jiangcheng District Chengxi Yangjiang City Guangdong 529500 (CN)
(74) Representative: Karakatsanis, Georgios

(56) References cited:
- NL-C1- 1 014 127
- US-A- 4 274 644
- US-A- 4 659 096

## Description

### Technical Field

The present invention relates to an effort saving flat platform cart device and more particularly pertains to an improved flat platform cart with collapsible casters which is convenient to collapse and use and capable of carrying heavy things.

At airports, piers, stations and warehouses, when people are required to move heavier luggage or things, they mostly use flat platform carts which are relatively effort saving and convenient. My China patent application 20071146724.7 published as CN 10117106 A has disclosed a flat platform cart with collapsible casters and a caster positioning means thereof which is convenient to collapse and use and capable of carrying heavy things. It comprises a load supporting platform, a push-pull section and casters, the ends of two supporting bars of the push-pull section are pivotally connected with a supporting frame, the caster sleeves on top of the casters are engaged onto the supporting frame, a caster extending, collapsing and linkage means is disposed between the caster sleeves and the supporting bars. The caster positioning means comprises a left and a right locking means which lock the caster sleeves on two side arms of the supporting frame with the supporting bars respectively, and a sliding cross bar which jointly moves with the left and the right locking means. The casters of the flat platform cart can be jointly moved with the push-pull section; when the push-pull section is folded up, the casters can be simultaneously and automatically collapsed to facilitate storage and transportation. However, as the caster positioning means merely fixes the push-pull section vertically relative to the supporting frame but not horizontally, the push-pull section sways forward and rearward relative to the supporting frame and thereby causing inconvenience in use.

### Disclosure of the Invention

An object of the present invention is to provide a flat platform cart with collapsible casters in which the push-pull section is reliably secured relative to the supporting frame and the casters by means of improving the extension positioning means between the push-pull section and the caster section.

A further object of the present invention is to provide a new locking means disposed between the push-pull section and the load supporting platform.

The present invention adopts the following technical proposal:
A flat platform cart with collapsible casters, comprising a supporting section, a push-pull section and a caster section connected thereto by a linkage means, and an extension positioning means which enables the push-pull section and the caster section to be maintained in an extending state, wherein the supporting section comprises a supporting frame, supporting bases and a load supporting platform which are interconnected together, the push-pull section has two supporting bars which are hinged onto the supporting bases respectively by means of a base bracket; the caster section comprises casters, connecting bars each connecting two or more casters and caster sleeves, the caster sleeves are engaged onto the supporting frame, the extension positioning means comprises a vertical positioning means which simultaneously locks the push-pull section and the caster section in position and a horizontal positioning means disposed between the load supporting platform and the supporting bases which horizontally locks the push-pull section in position.

The horizontal positioning means comprises locking pins which are horizontally slidable and disposed between the two supporting bars, each supporting bar and/or base bracket is disposed with a locking aperture which corresponds to a first end of the locking pin, each locking pin is connected to a knob which drives the locking pin to slide. A spring coaxial or in parallel to the locking pin is disposed at a second end of each of the locking pins, and an end of the spring is connected with the load supporting platform. A sliding plate parallel to the locking pin is disposed above each locking pin, the sliding plates are respectively connected with the knobs of the locking pins, each sliding plate is disposed with a keyhole formed by a circular hole in communication with an elongated hole, the load supporting platform is disposed with press buttons each having a circular base at positions corresponding to the keyholes, each press button has an upper end which protrudes from an upper end face of the load supporting platform, each press button is disposed with a reset spring at an underside thereof; the circular holes of the keyholes and the circular bases of the press buttons have substantially identical diameters, widths of the elongated holes and diameters of the press buttons correspond with each other.

The vertical positioning means comprises a left and a right connecting means which are disposed at a rear end of the load supporting platform and correspond to the two supporting bars respectively, each of the left and the right connecting means is disposed with an upper latching pin and a lower latching pin which are in parallel to each other, the two supporting bars and/or the base brackets are respectively disposed with positioning apertures corresponding to the upper latching pins, the lower latching pins are in rectangular shape, the connecting bars of the caster section each has an inner wall which correspond to the lower latching pin, the lower latching pins are latched into the connecting bars of the caster section after passing through rectangular apertures of the supporting bases respectively. Each base bracket is disposed with a curved connecting transition face between a lower end face and a rear end face thereof, the base brackets are each connected onto the respective supporting bases by means of an axle, when the upper latching pins are disengaged from the positioning apertures on the supporting bars and the base brackets, and the push-pull section is set to pivotally rotate around the axles, the transition faces of the base brackets push the connecting means rearward and thereby maintaining the vertical positioning means in an unlocking state.

To sum up the above-mentioned, the advantageous effects of the present invention in comparison with the prior art are:

Firstly, the extension positioning means between the push-pull section and the caster section of the flat platform cart comprises both a vertical positioning means and a horizontal positioning means, thus the push-pull section would not sway forward and rearward when in use.

Secondly, the horizontal positioning means are additionally disposed with press buttons and sliding plates, when the press buttons are pressed down, the knobs can be pushed to disenable the locking of the horizontal positioning means; when the locking pins are inserted into the corresponding locking apertures, the horizontal positioning means is locked in position, the pressed buttons are thus engaged into the circular holes of the sliding plates and thereby preventing the said means from accidentally being extended.

Thirdly, the base brackets on the supporting bars are disposed with curved transition faces, therefore, in the process of rotationally collapsing of the push-pull section towards the load supporting platform, the connecting means of the vertical positioning means can be pushed rearward, thereby maintaining the vertical positioning means in an unlocking state.

Fourthly, by skillfully utilize lock knobs disposed on the cross bar for the extension and retraction of the push-pull section and providing locking slots on the load supporting platform, the lock hooks on the lock knobs correspond with the locking slots to maintain the push-pull section and the load supporting platform in a locked state, thereby enabling the flat platform cart to become a stably connected body after it is collapsed.
FIG. 1 is a perspective view of the flat platform cart with collapsible casters (excluding the load supporting platform).
FIG. 2 is a perspective view of the flat platform cart with collapsible casters in FIG. 1 (including the load supporting platform).
FIG. 3 is a partial perspective sectional view of FIG. 2.
FIG. 4 is an enlarged view of the portion labeled "I" in FIG. 3.
FIG. 5 is a top view of FIG. 1.
FIG. 6 is an enlarged cross-sectional view taken along the line A-A in FIG. 5.
FIG. 7 is an enlarged cross-sectional view taken along the line B-B in FIG. 2.
FIG. 8 is a partial cross-sectional view of the push-pull section as shown in FIG. 7 in the process of collapsing.
FIG. 9 is an enlarged view of the portion labeled "II" in FIG. 8.
FIG. 10 is a perspective view of the push-pull section of the flat platform cart in the process of collapsing.
FIG. 11 is an enlarged view of the portion labeled "III" in FIG. 10.
FIG. 12 is an enlarged partial cross-sectional view taken along the line C-C in FIG. 2.
FIG. 13 is a perspective view of the flat platform cart in complete collapse.
FIG. 14 is a cross-sectional view taken along the line D-D in FIG. 13.
FIG. 15 is a cross-sectional view taken along the line E-E in FIG. 13.
FIG. 16 is a cross-sectional view taken along the line F-F in FIG. 13.
FIG. 17 is a perspective view of the connecting bar and the caster sleeves of the caster section of the flat platform cart.
FIG. 18 is a perspective view of the assembly of the sliding plate, the covering plate, the press button and the knob.
FIG. 19 is a front view of the covering plate.
FIG. 20 is a front view of the sliding plate.
FIG. 21 is an enlarged view of the portion labeled "J" in FIG. 3.
FIG. 22 is an exploded view of the flat platform cart.

### Best Mode for Carrying out the Invention

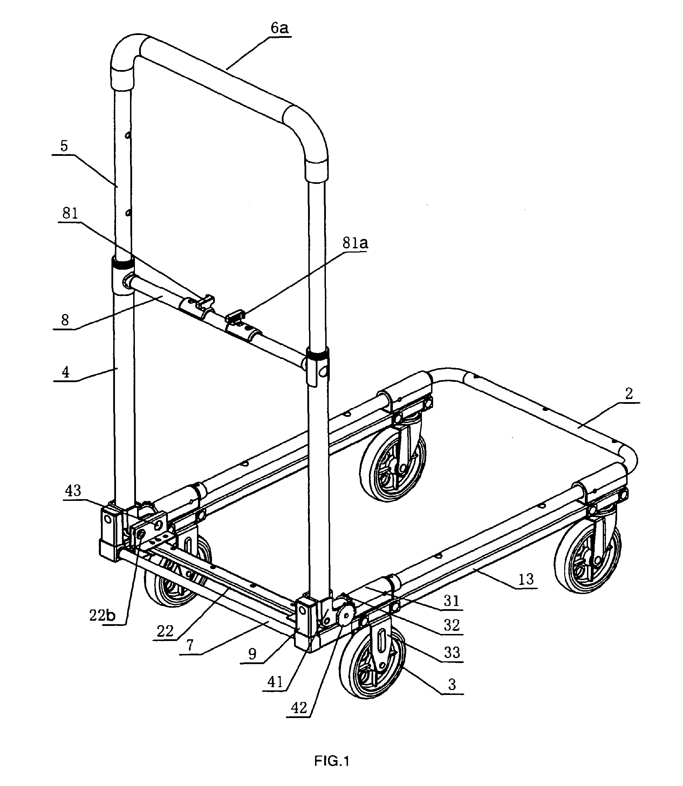

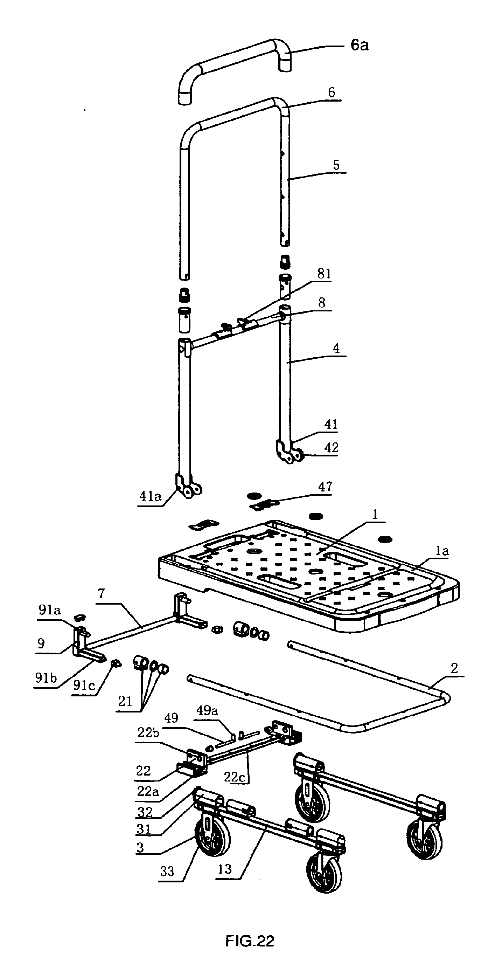

The flat platform cart of the present embodiment mainly comprises a supporting section, a push-pull section and a caster section connected thereto by a linkage means, and an extension positioning means which enables the push-pull section and the caster section to be maintained in an extending state. As illustrated in FIGS. 1 and 22, the supporting section comprises a supporting frame 2, a load supporting platform 1 and supporting bases 22. The push-pull section comprises a handle 6, a soft plastic cover 6a covered on the handle 6, supporting bars 4, secondary supporting bars 5 which are telescopingly received in the supporting bars 4 respectively and a cross bar 8. The cross bar 8 is disposed with a lock (not shown in the drawings) and a lock reset spring 82 therein, and lock knobs 81 in connection with the lock. The caster section comprises casters 3, caster brackets 33, connecting bars 13 and caster sleeves 31. The casters 3 on the same side are connected via the connecting bar 13 to form a caster assembly. The caster sleeves 31 are engaged onto the supporting frame 2. The supporting frame is bended to form a U shape, the ends thereof are connected with the supporting bases 22 by means of a plurality of connecting parts 21. The supporting bases 22 are connected with a horizontal plate 22c. The horizontal plate 22c can strengthen the firmness of the supporting section, thereby enabling the flat platform cart to carry heavier weight.

Each supporting bar 4 is secured with a base bracket 41 at an end thereof. The base bracket 41 in combination with the supporting bar 4 form an L shape. Each base bracket 41 has a front end which is disposed with gears 42 at an outer side thereof. The gears 42 meshes with the gears 32 disposed on end faces of the caster sleeves to form a first coordinating part and a second coordinating part of the extending, collapsing and linkage means. The base brackets 41 are each connected onto the respective supporting bases 22 by means of an axle 42, so that when the push-pull section is collapsed, the intermeshing gears 42, 32 cause the caster assemblies to automatically collapse.

A vertical positioning means mainly comprises connecting means 9, upper latching pins 91a, lower latching pins 91b and a connecting bar 7. A horizontal positioning means mainly comprises locking pins 49, push buttons 52, knobs 46 and so on. The vertical positioning means and the horizontal positioning means are used for maintaining the extending state of a flat platform cart when being extended for work.

As the present invention is mainly a further improvement on the flat platform cart with collapsible casters disclosed in the China patent 200710146724.7, the parts of similar structures are not described in detail in the present embodiment whereas only the improved structures are described in detail.

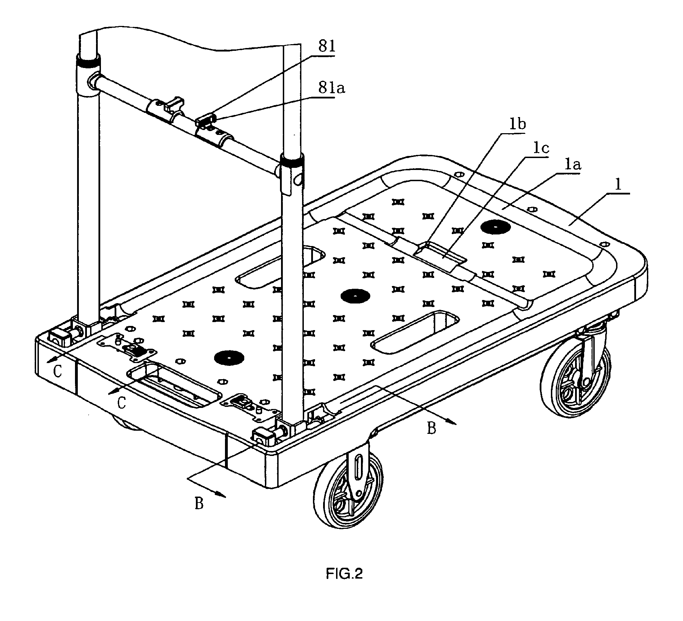

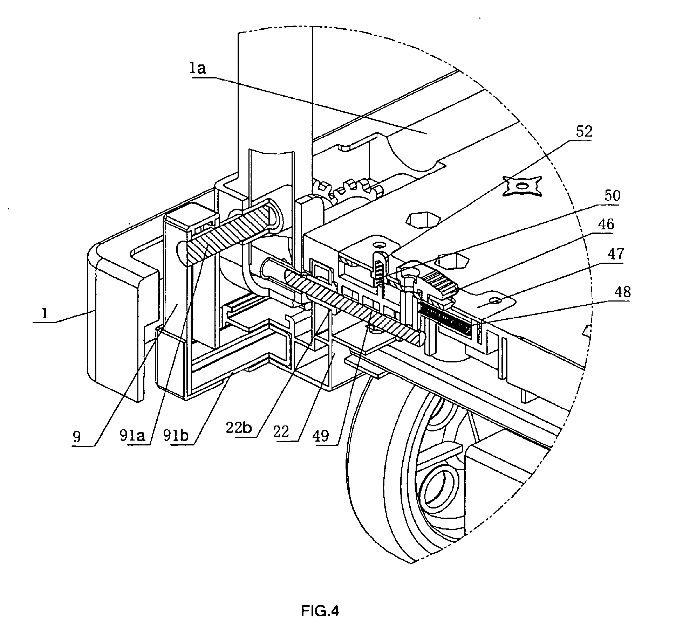

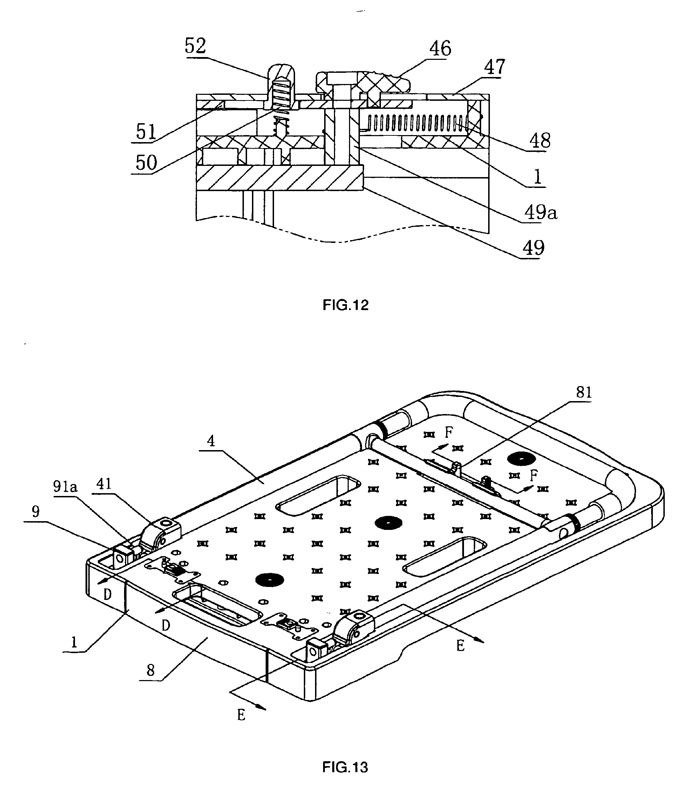

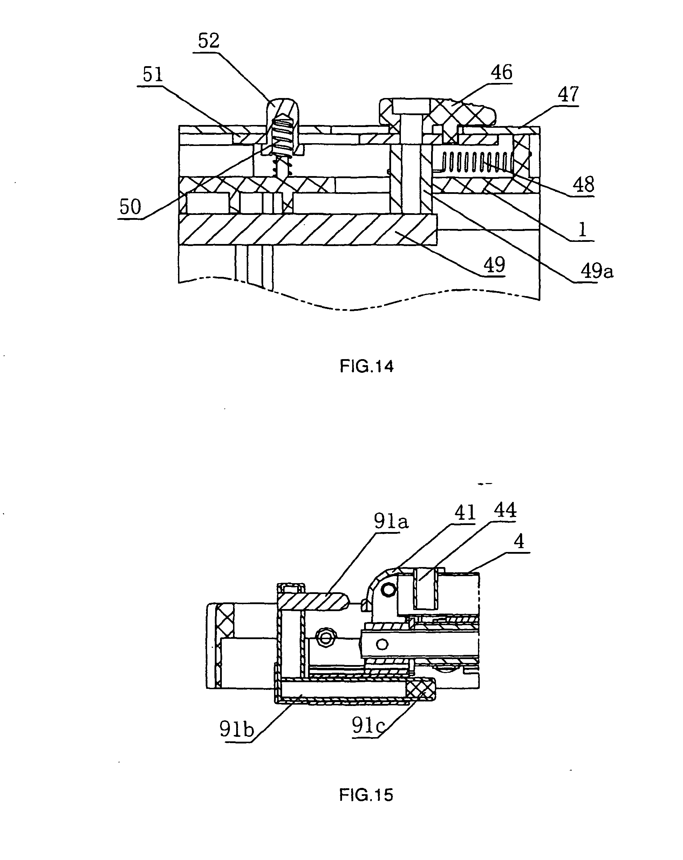

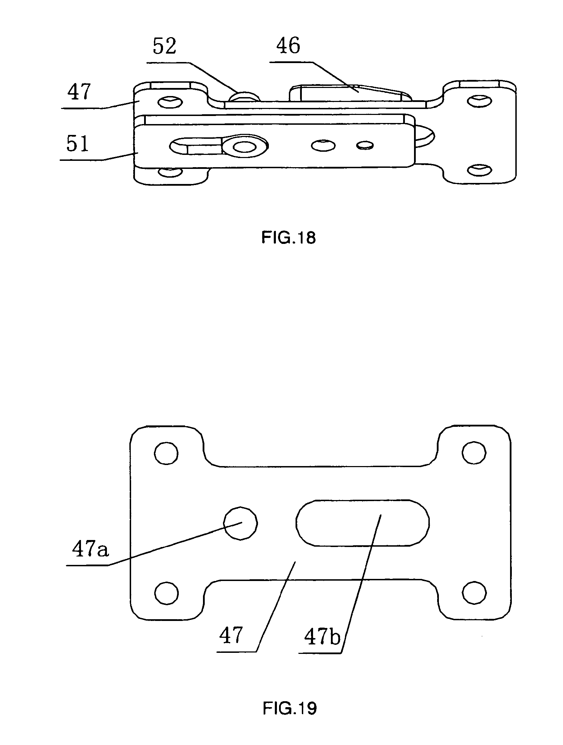

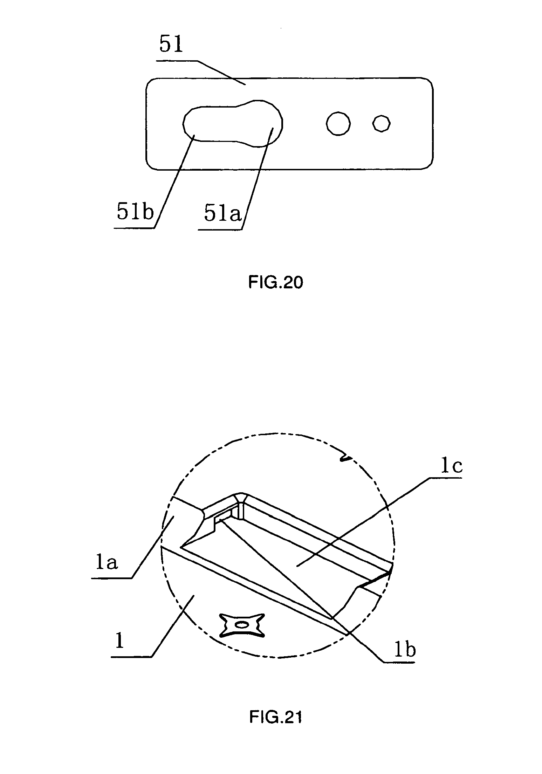

As illustrated in FIGS. 2 - 4 and 12, the horizontal positioning means of the flat platform cart of the present embodiment comprises locking pins 49 which are horizontally slidable and disposed between the two supporting bars 4. Each base bracket 41 is disposed with a locking aperture 41a which corresponds to a first end of the locking pin 49. Each supporting base 22 is also disposed with a corresponding aperture 22b. Each aperture 22b is disposed with bushings therein. First ends of the locking pins 49 pass through the bushings in the apertures 22b and insert into the locking apertures 41a respectively. Second ends of the locking pins 49 are connected via connecting posts 49a to knobs 46 which drive the locking pins 49 to slide respectively. The connecting posts 49 are disposed with springs 48 thereon in parallel with the locking pins 49, the other ends of the springs 48 are secured on the mounting posts on the load supporting platform 1. As illustrated in FIGS. 4, 12 and 14, a sliding plate 51 parallel to the locking pin 49 is disposed above each locking pin 49; the sliding plate 51 and the locking pin 49 and the knob 46 are connected together. As illustrated in FIGS. 18, 19 and 20, each sliding plate 51 is disposed with a keyhole formed by a circular hole 51a in communication with an elongated hole 51b. A covering plate 47 secured on the load supporting platform 1 is disposed above each sliding plate 51. The load supporting platform 1 is disposed with press buttons 52 each having a circular base at positions corresponding to the keyholes. Each covering plate 47 is disposed with a through hole 47a for the press button 52 to pass through and a sliding slot 47b for the knob 46 to slide. Each press button 52 is disposed with a reset spring 50 at an underside thereof. The circular holes 51a of the keyholes and the circular bases of the press buttons 52 have substantially identical diameters, widths of the elongated holes 51b and diameters of the press buttons 52 correspond with each other.

When the flat platform cart is in a collapsing state, the first ends of the locking pins 49 abut against side faces of the base brackets 41, the springs 48 are compressed (as shown in 14), the circular bases of the press buttons 52 are pressed under the sliding plates 51 by the elongated holes 51b. When the push-pull section of the flat platform cart is rotationally extended in position, the front ends of the locking pins 49 are pressed into the locking apertures 41a by the springs 48, the locking pins 49 drives the sliding plates 51 to slide towards the supporting bars 4, when the circular holes 51 a on the sliding plates 51 align with the circular bases of the press buttons 52, the press buttons 52 automatically elevate under the action of the reset springs 50 and the circular bases enter into the circular holes 51a of the sliding plates 51, thereby securing the sliding plates 51 relative to the locking pins 49 and achieving horizontal positioning of the push-pull section. When the push-pull system is required to be collapsed, the press buttons 51 are slightly pressed down, the knobs 46 are pushed in opposite directions, thereby causing the locking pins 49 to be disengaged from the locking apertures 41a, the horizontal positioning means can instantly be disenabled, simultaneously, the connecting bar 7 which is connected with the connecting means 9 is pulled, and the locking of the vertical positioning means is disenabled, the push-pull section can be rotationally collapsed around the axles 43.

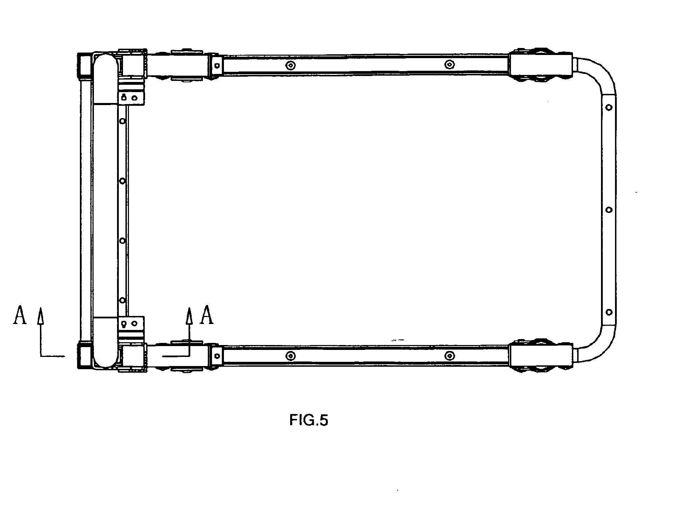

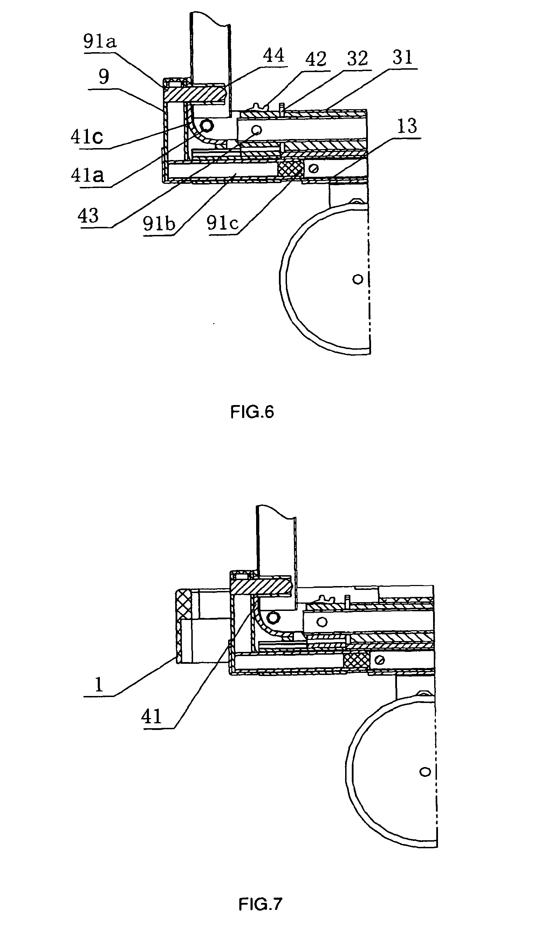

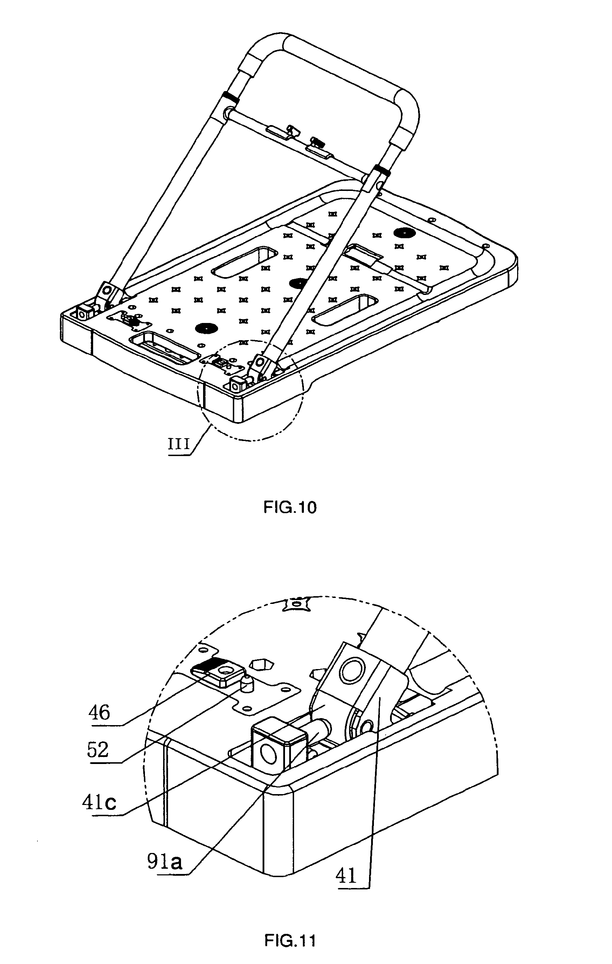

As illustrated in FIGS. 1 - 11, the horizontal positioning means of the flat platform cart of the present embodiment comprises a left and a right connecting means 9 corresponding with the two supporting bars 4. The left and the right connecting means are disposed on the rear sides of the supporting bases 22. The connecting means 9 are each disposed with an upper latching pin 91a and a lower latching pin 91b which are in parallel to each other. The left and the right connecting means 9 are connected into an unitary body by means of the connecting bar 7. The two supporting bars 4 are respectively disposed with positioning apertures 44 corresponding to the upper latching pins 91a. At the same time, as the lower ends of the supporting bars 4 are securely connected with the base brackets 41, the base brackets 41 are also disposed with apertures 41b coaxial with the positioning apertures 44, the upper latching pins are simultaneously inserted into the apertures 41b and the positioning apertures 44. The lower latching pins 91b are in rectangular shape and correspond with the rectangular apertures 22a of the lower parts of the supporting bases 22 and the inner apertures 13a of the caster connecting bars 13. Besides, to ensure inserting accuracy, the front ends of the lower latching pins 91b are further disposed with guiding corners, the end faces are disposed with stoppers 91c.

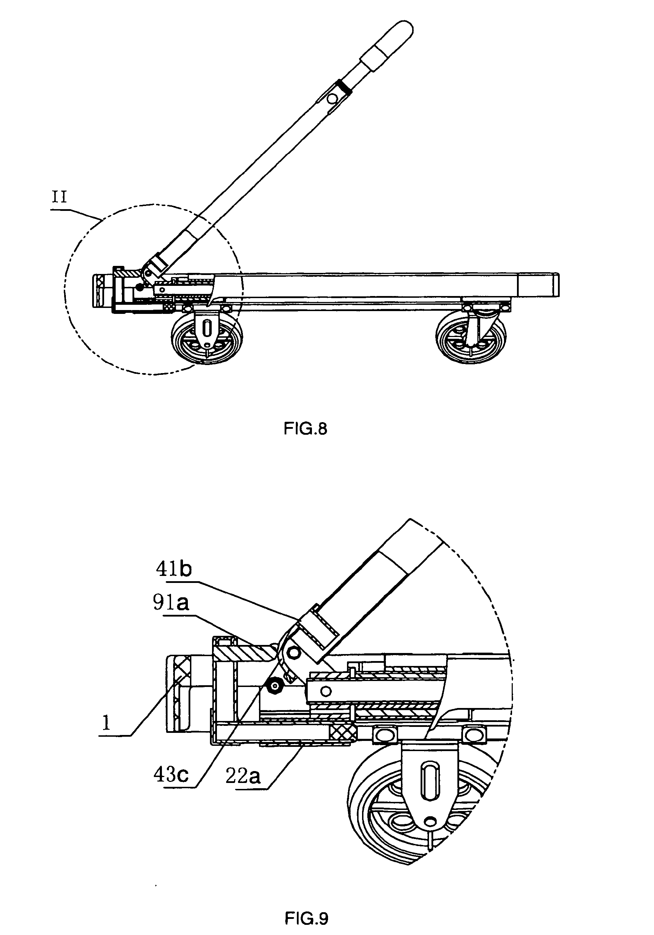

Each base bracket 41 is disposed with a curved connecting transition face 41c between a rear side face and a lower end face thereof. Each base bracket 41 is connected onto the supporting base 22 on the rear side of the supporting frame 2 by an axle which passes through center of the gears 42. When the upper latching pins 91 a are disengaged from the positioning apertures 44 on the supporting bars 4 and the apertures 41b on the base brackets 41, and the push-pull section is set to rotate around the axles 43 at the centers of the gears 42, the transition faces 41c of the base brackets 41 push the connecting means 9 rearward, causing the vertical positioning means to be maintained in an unlocking state (as illustrated in FIGS. 8, 9, and 15). As the present embodiment is simultaneously disposed with the horizontal positioning means and the vertical positioning means, the horizontal positioning means is also required to be unlocked before the push-pull section is set to rotate.

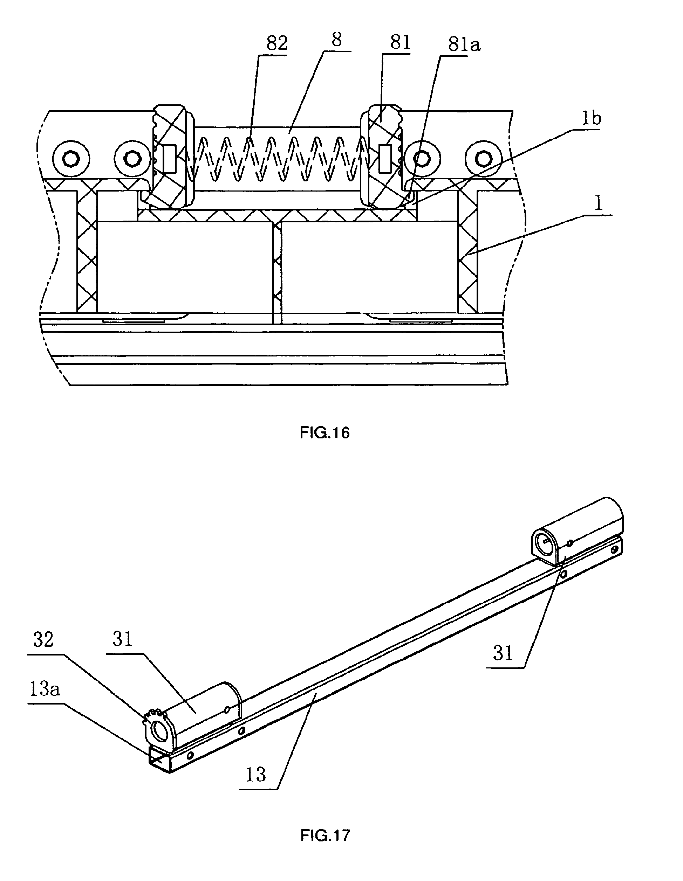

As illustrated in FIGS. 17 and 22, the connecting bars 13 of the caster assembly adopt a squared tubular material with a dovetail slot on the top. The undersides of the caster sleeves 31 have inverted T-shaped mounting plates, the mounting plates are engaged in the dovetail slots of the connecting bars 13 and connected into unitary bodies. The gears 32 are secured on the front end faces of the caster sleeves 31. In this way, each caster assembly is an unitary body, therefore, only the caster sleeves 31 of the first casters 3 are disposed with the gears 32 and that can bring about the entire caster assembly rotating around the supporting frames 2 at consistent angles, thereby collapsing all the casters 3 at one-time.

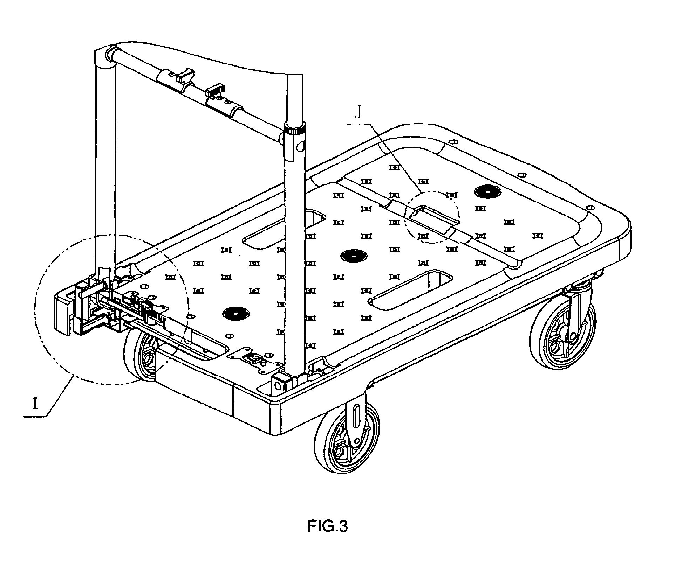

As illustrated in FIGS. 3, 13, 16, 21 and 22, the cross bar 8 of the push-pull section is horizontally disposed with a lock and a lock reset spring 82 therein, the lock knobs 81 are connected with the lock. Simultaneously, the load supporting platform 1 is disposed with a groove 1a for receiving the push-pull section when it is collapsed, and an indented cavity 1c positioned corresponding to the lock knobs 81 on the cross bar. Two sides of the indented cavity 1c are each disposed with a locking slot 1b corresponding to a locking hook 81a on the lock knobs 81. The locking hooks 81a can be engaged into the locking slots 1b under the action of the lock reset spring 82, thereby enabling the push-pull section and the load supporting platform 1 to be maintained at a locked state.

## Claims

1. A flat platform cart with collapsible casters, comprising a supporting section, a push-pull section and a caster section connected thereto by a linkage means, and an extension positioning means which enables the push-pull section and the caster section to be maintained in an extending state, wherein the supporting section comprises a supporting frame (2), supporting bases (22) and a load supporting platform (1) which are interconnected together, the push-pull section has two supporting bars (4) which are hinged onto the supporting bases (22) respectively by means of a base bracket (41); the caster section comprises casters (3), connecting bars (13) each connecting two or more casters (3) and caster sleeves (31), the caster sleeves are engaged onto the supporting frame (2), wherein the extension positioning means comprises a vertical positioning means which simultaneously locks the push-pull section and the caster section in position, **characterised in that** the extension positioning means further comprises a horizontal positioning means disposed between the load supporting platform (1) and the supporting bases (22) which horizontally locks the push-pull section in position.

2. A flat platform cart with collapsible casters as in Claim 1, wherein the horizontal positioning means comprises locking pins (49) which are horizontally slidable and disposed between the two supporting bars (4), each supporting bar (4) and/or base bracket (41) is disposed with a locking aperture which corresponds to a first end of the locking pin (49), each locking pin is connected to a knob (46) which drives the locking pin to slide.

3. A flat platform art with collapsible casters as in Claim 2, wherein a spring (48) coaxial or in parallel to the locking pin (49) is disposed at a second end of each of the locking pins, and an end of the spring (48) is connected with the load supporting platform (1).

4. A flat platform cart with collapsible casters as in Claim 3, wherein a sliding plate parallel to the locking pin is disposed above each locking pin (49), the sliding plates are respectively connected with the knobs (46) of the locking pins (49), each sliding plate (51) is disposed with a keyhole formed by a circular hole (51 a) in communication with an elongated hole (51 b), the load supporting platform (1) is disposed with press buttons (52) each having a circular base at positions corresponding to the keyholes, each press button has an upper end which protrudes from an upper end face of the load supporting platform (1), each press button is disposed with a reset spring (50) at an underside thereof; the circular holes (51 a) of the keyholes and the circular bases of the press buttons have substantially identical diameters, widths of the elongated holes (51 b) and diameters of the press buttons (52) correspond with each other.

5. A flat platform art with collapsible casters as in Claim 4, wherein a covering plate (47) secured on the load supporting platform (1) is disposed above each sliding plate (51), each covering plate (47) is disposed with a through hole (47a) for the press button (52) to pass through and a sliding slot (47b) for the knob (46) to slide.

6. A flat platform cart with collapsible casters as in Claim 1, wherein the vertical positioning means comprises a left and a right connecting means (9) which are disposed at a rear end of the load supporting platform (1) and correspond to the two supporting bars (4) respectively, each of the left and the right connecting means (9) is disposed with an upper latching pin (91 a) and a lower latching pin (91 b) which are in parallel to each other, the two supporting bars (4) and/or the base brackets (41) are respectively disposed with positioning apertures corresponding to the upper latching pins (91 a), the lower latching pins (91 b) are in rectangular shape, the connecting bars (13) of the caster section each has an inner wall which correspond to the lower latching pin (91 b), the lower latching pins (91 b) are latched into the connecting bars (13) of the caster section after passing through rectangular apertures (22a) of the supporting bases (22) respectively.

7. A flat platform cart with collapsible casters as in Claim 1, wherein each base bracket is disposed with a curved connecting transition face between a lower end face and a rear end face thereof, the base brackets (41) are each connected onto the respective supporting bases (22) by means of an axle, when the upper latching pins (91 a) are disengaged from the positioning apertures on the supporting bars (4) and the base brackets (41), and the push-pull section is set to pivotally rotate around the axles, the transition faces (41 c) of the base brackets (41) push the connecting means (9) rearward and thereby maintaining the vertical positioning means in an unlocking state.

8. A flat platform cart with collapsible casters as in Claim 7, wherein the linkage means comprises a first coordinating part and a second coordinating part; the first coordinating part and the second coordinating part are intermeshing gears (42, 43) perpendicular to each other; the gears (42) of the first coordinating part are disposed on the base brackets (41) respectively, the gears (43) of the second coordinating part are disposed on end faces of the caster sleeves (31) respectively.

9. A flat platform cart with collapsible casters as in Claim 2, wherein the push-pull section comprises a cross bar (8) horizontally connected with the supporting bars (4), a support bars extension and retraction lock and a lock reset spring (82) disposed in the cross bar (8), and lock knobs (81) disposed on the cross bar (8) in connection with the lock.

10. A flat platform cart with collapsible casters as in Claim 9, wherein the load supporting platform (1) is disposed with locking slots (1 b) at positions corresponding to the lock knobs (81) on the cross bar (81) for maintaining the push-pull section and the load supporting platform (1) at a locked state; the lock knobs (81) each has a lock hook (81 a) on an outer side face thereof, under action of the lock reset spring (82), the lock hooks (81 a) are engaged in the locking slots (1 b) respectively.

## Patentansprüche

1. Pritschenwagen mit einklappbaren Laufrollen, welcher einen Tragabschnitt, einen Schub-Zug-Abschnitt und einen Laufrollenabschnitt, der durch ein Kopplungsmittel mit diesem verbunden ist, umfasst, und ein Ausklapp-Positioniermittel, welches ermöglicht, dass der Schub-Zug-Abschnitt und der Laufrollenabschnitt in einem ausgeklappten Zustand gehalten werden, wobei der Tragabschnitt einen Tragrahmen (2), Stützbasisteile (22) und eine Lasttragplattform (1), welche miteinander verbunden sind, umfasst, der Schub-Zug-Abschnitt zwei Stützstangen (4) aufweist, welche an den Stützbasisteilen (22) jeweils mittels einer Basishalterung (41) angelenkt sind; wobei der Laufrollenabschnitt Laufrollen (3), Verbindungsstangen (13), die jeweils zwei oder mehr Laufrollen (3) verbinden, und Laufrollenhülsen (31) umfasst, wobei die Laufrollenhülsen auf den Tragrahmen (2) aufgesetzt sind, wobei das Ausklapp-Positioniermittel ein Vertikal-Positioniermittel, welches den Schub-Zug-Abschnitt und den Laufrollenabschnitt gleichzeitig in ihrer Position verriegelt, umfasst, **dadurch gekennzeichnet, dass** das Ausklapp-Positioniermittel ferner ein Horizontal-Positioniermittel, das zwischen der Lasttragplattform (1) und den Stützbasisteilen (22) angeordnet ist, umfasst, welches den Schub-Zug-Abschnitt horizontal in seiner Position verriegelt.

2. Pritschenwagen mit einklappbaren Laufrollen nach Anspruch 1, wobei das Horizontal-Positioniermittel Verriegelungsbolzen (49) umfasst, welche horizontal verschiebbar und zwischen den zwei Stützstangen (4) angeordnet sind, wobei jede Stützstange (4) und/oder Basishalterung (41) mit einer Verriegelungsöffnung versehen ist, welche einem ersten Ende des Verriegelungsbolzens (49) entspricht, wobei jeder Verriegelungsbolzen mit einem Knauf (46) verbunden ist, welcher bewirkt, dass der Verriegelungsbolzen gleitet.

3. Pritschenwagen mit einklappbaren Laufrollen nach Anspruch 2, wobei eine Feder (48), die koaxial oder parallel zu dem Verriegelungsbolzen (49) ist, an einem zweiten Ende jedes der Verriegelungsbolzen angeordnet ist und ein Ende der Feder (48) mit der Lasttragplattform (1) verbunden ist.

4. Pritschenwagen mit einklappbaren Laufrollen nach Anspruch 3, wobei eine zu dem Verriegelungsbolzen parallele Gleitplatte über jedem Verriegelungsbolzen (49) angeordnet ist, wobei die Gleitplatten jeweils mit den Knaufen (46) der Verriegelungsbolzen (49) verbunden sind, wobei jede Gleitplatte (51) mit einer schlüssellochförmigen Öffnung versehen ist, die von einem kreisförmigen Öffnung (51a), die mit einer langgestreckten Öffnung (51b) kommuniziert, gebildet wird, wobei die Lasttragplattform (1) mit Druckknöpfen (52), die jeweils einen kreisförmigen Basisteil aufweisen, an Positionen, die den schlüssellochförmigen Öffnungen entsprechen, versehen ist, wobei jeder Druckknopf ein oberes Ende aufweist, welches von einer oberen Stirnseite der Lasttragplattform (1) aus vorsteht, wobei jeder Druckknopf an einer Unterseite desselben mit einer Rückholfeder (50) versehen ist, wobei die kreisförmigen Öffnungen (51a) der schlüssellochförmigen Öffnungen und die kreisförmigen Basisteile der Druckknöpfe im Wesentlichen identische Durchmesser aufweisen, wobei die Breiten der langgestreckten Öffnungen (51b) und die Durchmesser der Druckknöpfe (52) einander entsprechen.

5. Pritschenwagen mit einklappbaren Laufrollen nach Anspruch 4, wobei eine Abdeckplatte (47), die auf der Lasttragplattform (1) befestigt ist, über jeder Gleitplatte (51) angeordnet ist, wobei jede Abdeckplatte (47) mit einer Durchgangsbohrung (47a) zum Passierenlassen des Druckknopfes (52) und einem Gleitschlitz (47b) zum Ermöglichen des Gleitens des Knaufes (46) versehen ist.

6. Pritschenwagen mit einklappbaren Laufrollen nach Anspruch 1, wobei das Vertikal-Positioniermittel ein linkes und ein rechtes Verbindungsmittel (9) umfasst, welche an einem hinteren Ende der Lasttragplattform (1) angeordnet sind und jeweils einer der zwei Stützstangen (4) entsprechen, wobei jedes von dem linken und dem rechten Verbindungsmittel (9) mit einem oberen Rastbolzen (91a) und einem unteren Rastbolzen (91b), welche parallel zueinander sind, versehen ist, wobei die zwei Stützstangen (4) und/oder die Basishalterungen (41) jeweils mit Positionieröffnungen versehen sind, die den oberen Rastbolzen (91a) entsprechen, wobei die unteren Rastbolzen (91b) von rechteckiger Form sind, wobei die Verbindungsstangen (13) des Laufrollenabschnitts jeweils eine Innenwand aufweisen, welche dem unteren Rastbolzen (91b) entspricht, wobei die unteren Rastbolzen (91b) in die Verbindungsstangen (13) des Laufrollenabschnitts eingerastet werden, nachdem sie jeweils durch eine rechteckige Öffnung (22a) eines der Stützbasisteile (22) hindurchgeführt wurden.

7. Pritschenwagen mit einklappbaren Laufrollen nach Anspruch 1, wobei jede Basishalterung mit einer gekrümmten Verbindungsübergangsfläche zwischen einer unteren Stirnseite und einer hinteren Stirnseite derselben versehen ist, wobei die Basishalterungen (41) mit den entsprechenden Stützbasisteilen (22) jeweils mittels einer Achse verbunden sind, wobei, wenn die oberen Rastbolzen (91a) aus den Positionieröffnungen an den Stützstangen (4) und den Basishalterungen (41) gelöst sind und der Schub-Zug-Abschnitt dafür eingestellt ist, sich schwenkend um die Achsen zu drehen, die Übergangsflächen (41c) der Basishalterungen (41) die Verbindungsmittel (9) nach hinten schieben und **dadurch** die Vertikal-Positioniermittel in einem Entriegelungszustand halten.

8. Pritschenwagen mit einklappbaren Laufrollen nach Anspruch 7, wobei das Kopplungsmittel ein erstes koordinierendes Teil und ein zweites koordinierendes Teil umfasst; wobei das erste koordinierende Teil und das zweite koordinierende Teil ineinandergreifende Zahnräder (42, 43) sind, die zueinander senkrecht sind; wobei die Zahnräder (42) des ersten koordinierenden Teils jeweils an den Basishalterungen (41) angeordnet sind und die Zahnräder (43) des zweiten koordinierenden Teils jeweils an Stirnseiten der Laufrollenhülsen (31) angeordnet sind.

9. Pritschenwagen mit einklappbaren Laufrollen nach Anspruch 2, wobei der Schub-Zug-Abschnitt eine Traverse (8) umfasst, die horizontal mit den Stützstangen (4) verbunden ist, wobei ein Stützstangen-Ausfahr/Einfahr-Schloss und eine Schlossrückholfeder (82) in der Traverse (8) angeordnet sind und Verriegelungsknöpfe (81) auf der Traverse (8) in Verbindung mit dem Schloss angeordnet sind.

10. Pritschenwagen mit einklappbaren Laufrollen nach Anspruch 9, wobei die Lasttragplattform (1) mit Verriegelungsschlitzen (1b) an Positionen versehen ist, die den Verriegelungsknöpfen (81) auf der Traverse (8) entsprechen, um den Schub-Zug-Abschnitt und die Lasttragplattform (1) in einem verriegelten Zustand zu halten; wobei die Verriegelungsknöpfe (81) jeweils einen Verriegelungshaken (81a) auf einer äußeren Seitenfläche derselben aufweisen, und wobei unter der Wirkung der Schlossrückholfeder (82) die Verriegelungshaken (81a) jeweils in einen der Verriegelungsschlitze (1b) einrasten.

## Revendications

1. Chariot à plateforme plat avec roulettes repliables, comprenant une section de support, une section de poussée-traction et une section de roulette raccordée à celle-ci par un moyen de tringlerie, et un moyen de positionnement à extension qui permet de maintenir la section de poussée-traction et la section de roulette dans un état étendu, dans lequel la section de support comprend un châssis de support (2), des bases de support (22) et une plateforme de support de charge (1) qui sont interconnectées conjointement, la section de poussée-traction comporte deux barres de support (4) qui sont raccordées par charnière sur les bases de support (22) respectivement au moyen d'une console de base (41), la section de roulette comprend des roulettes (3), des barres de raccordement (13) raccordant chacune deux ou plusieurs roulettes (3) et des douilles de roulettes (31), les douilles de roulettes sont mises en prise avec le châssis de support (2), dans lequel le moyen de positionnement à extension comprend un moyen de positionnement vertical qui verrouille simultanément en position la section de poussée-traction et la section de roulette, **caractérisé en ce que** le moyen de positionnement à extension comprend en outre un moyen de positionnement horizontal disposé entre la plateforme de support de charge (1) et les bases de support (22) qui verrouille horizontalement en position la section poussée-traction.

2. Chariot à plateforme plat avec roulettes repliables selon la revendication 1, dans lequel le moyen de positionnement horizontal comprend des goupilles de verrouillage (49) qui sont coulissables horizontalement et disposées entre les deux barres de support (4), chaque barre de support (4) et /ou console de base (41) est disposée avec une ouverture de verrouillage qui correspond à une première extrémité de la goupille de verrouillage (49), chaque goupille de verrouillage est raccordée à un bouton (46) qui entraîne la goupille de verrouillage à coulisser.

3. Chariot à plateforme plat avec roulettes repliables selon la revendication 2, dans lequel un ressort (48) coaxial ou parallèle à la goupille de verrouillage (49) est disposé à une seconde extrémité de chacune des goupilles de verrouillage, et une extrémité du ressort (48) est raccordée à la plateforme de support de charge (1).

4. Chariot à plateforme plate avec roulettes repliables selon la revendication 3, dans lequel une plaque coulissante parallèle à la goupille de verrouillage est disposée au-dessus de chaque goupille de verrouillage (49), les plaques coulissantes sont respectivement raccordées aux boutons (46) des goupilles de verrouillage (49), chaque plaque coulissante (51) est disposée avec un trou de serrure formé par un trou circulaire (51a) en communication avec un trou allongé (51b), la plateforme de support de charge (1) est disposée avec des boutons pression (52) ayant chacun une base circulaire à des positions correspondant aux trous de serrure, chaque bouton pression possède une extrémité supérieure qui dépasse d'une face d'extrémité supérieure de la plateforme de support de charge (1), chaque bouton pression est disposé avec un ressort de rappel (50) à un côté inférieur de celui-ci ; les trous circulaires (51a) des trous de serrure et les bases circulaires des boutons pression ont des diamètres substantiellement identiques, les largeurs des trous allongés (51b) et les diamètres des boutons pression (52) concordent les unes avec les autres.

5. Chariot à plateforme plat avec roulettes repliables selon la revendication 4, dans lequel une plaque de couverture (47) fixée sur la plateforme de support de charge (1) est disposée au-dessus de chaque plaque coulissante (51), chaque plaque de couverture (47) est disposée avec un alésage traversant (47a) pour que le bouton pression (52) passe à travers et une fente coulissante (47b) pour que le bouton (46) coulisse.

6. Chariot à plateforme plat avec roulettes repliables selon la revendication 1, dans lequel le moyen de positionnement vertical comprend des moyens de raccordement gauche et droit (9)qui sont disposés à une extrémité arrière de la plateforme de support de charge (1) et correspondant aux deux barres de support (4) respectivement, chacun des moyens de raccordement (9) gauche et droit est disposé avec une goupille de verrouillage supérieure (91a) et une goupille de verrouillage inférieure (91b) qui sont parallèles l'une à l'autre, les deux barres de support (4) et/ou les consoles de base (41) sont respectivement disposées avec des ouvertures de positionnement correspondant aux goupilles de verrouillage supérieures (91a), les goupilles de verrouillage inférieures (91b) sont de forme rectangulaire, les barres de raccordement (13)de la section de roulette ont chacune une paroi intérieure qui correspond à la goupille de verrouillage inférieure (91b), les goupilles de verrouillage inférieures (91b) sont verrouillées dans les barres de raccordement (13)de la section de roulette après être passées à travers les ouvertures rectangulaires (22a) des bases de support (22), respectivement.

7. Chariot à plateforme plat avec roulettes repliables selon la revendication 1, dans lequel chaque console de base est disposée avec une face de transition de raccordement incurvée entre une face d'extrémité inférieure et une face d'extrémité arrière de celle-ci, les consoles de base (41) sont chacune raccordées sur les bases de support (22) respectives au moyen d'un essieu, quand les goupilles de verrouillage supérieures (91a) sont désengagées des ouvertures de positionnement sur les barres de support (4) et les consoles de base (41), et la section de poussée-traction est réglée de manière à pivoter rotativement autour des essieux, les faces de transition (41c) des consoles de base (41) poussent le moyen de raccordement (9) vers l'arrière et maintiennent ainsi le moyen de positionnement vertical dans un état de déverrouillage.

8. Chariot à plateforme plat avec roulettes repliables selon la revendication 7, dans lequel le moyen de tringlerie comprend une première pièce de coordination et une seconde pièce de coordination ; la première pièce de coordination et la seconde pièce de coordination sont des engrenages engrenés (42,43) perpendiculaires l'un à l'autre ; les engrenages (42) de la première pièce de coordination sont disposés sur les consoles de base (41) respectivement, les engrenages (43) de la seconde pièce de coordination sont disposés sur les faces d'extrémités de douilles de roulettes (31) respectivement.

9. Chariot à plateforme plat avec roulettes repliables selon la revendication 2, dans lequel la section de poussée-traction comprend une entretoise transversale (8) raccordée horizontalement avec les barres de support (4), un verrouillage à extension et rétraction des barres de support et un ressort de
rappel de verrouillage (82) disposé dans l'entretoise transversale (8), et des boutons de verrouillage (81) disposés sur l'entretoise transversale (8) en raccord avec le verrouillage.

10. Chariot à plateforme plat avec roulettes repliables selon la revendication 9, dans lequel la platetorme de support de charge (1) est disposée avec des fentes de verrouillage (1b) à des positions correspondant aux boutons de verrouillage (81) sur l'entretoise transversale (81) pour maintenir la section de poussée-traction et la plateforme de support de charge (1) à un état verrouillé ; les boutons de verrouillage (81) comportent chacun un crochet de verrouillage (81a) sur une face de côté extérieur de ceux-ci, sous l'action du ressort de rappel de verrouillage (82), les crochets de verrouillage (81a) sont mis en prise dans les fentes de verrouillage (1b) respectivement.
